# DEMANDE DE BREVET EUROPEEN

(11) **EP 1 791 078 A1**
(43) Date de publication de la demande: **30.05.2007**
(21) Numéro de dépôt: 06291792.7
(22) Date de dépôt: 20.11.2006
(51) Int. Cl.: G06K 9/00, G06K 9/20, B60K 31/00

(54) **Procédé de détection d'obstacles mis en oeuvre au sein d'un véhicule automobile**

(30) Priorité: 24.11.2005 FR 0511908
(71) Demandeur: VALEO VISION, 93012 Bobigny Cédex (FR)
(72) Inventeur: Fleury, Benoît, 94300 Vincennes (FR)

(57) **Abrégé**

L'invention se rapporte à la détection d'obstacles (102) positionnés sur la trajectoire d'un véhicule. A cet effet, on utilise un illuminateur (700) pour projeter un motif sur une scène (100) à observer, et on filme la scène (101) ainsi éclairée au moyen d'une caméra; l'axe optique de la caméra et l'axe de projection du projecteur sont sensiblement parallèles au sens de déplacement du véhicule, tout en étant distant l'un de l'autre. Ainsi disposée, la caméra permet d'obtenir un point de vue de la scène différent de celui obtenu depuis l'illuminateur. Ainsi, seuls les éléments du motif qui ont conservé leur forme originale correspondent à des obstacles sensiblement perpendiculaires à l'axe de projection. Par filtrage, on détecte alors la présence d'obstacles sur la trajectoire du véhicule. Avantageusement, l'illuminateur projette le motif dans une plage de longueur d'onde invisible pour l'oeil, la caméra étant sensible à cette plage de longueur d'ondes.

## Description

La présente invention a pour objet un procédé, mis en oeuvre au sein d'un véhicule automobile, de détection d'obstacles, les obstacles étant notamment de type éléments frontaux, et la détection étant effectuée au moins dans des conditions de circulation nocturne. Par élément frontal, on désigne tout sujet, animé ou non, vivant ou non, disposé, devant le véhicule considéré, sur une route qu'il est en train d'emprunter ou sur le bord de cette route. Par exemple, il peut s'agir d'un autre véhicule automobile, roulant ou à l'arrêt, ou d'un piéton traversant une route.

L'invention a ainsi essentiellement pour but de proposer une solution pour détecter de façon automatique tout élément frontal, susceptible d'entrer en collision avec le véhicule mettant en oeuvre ladite solution, solution fiable et économique car elle peut se contenter de faire intervenir un illuminateur et une caméra associés à un calculateur dont les performances requises sont minimes. Si la solution proposée par l'invention est particulièrement avantageuse dans des conditions de circulation nocturne, elle peut également être mise en oeuvre dans des conditions de circulation diurne. La présente invention a également pour objet tout véhicule automobile apte à mettre en oeuvre un tel procédé.

Le domaine de l'invention est, d'une façon générale, celui de la sécurité automobile, et plus particulièrement celui de la détection d'obstacles par un véhicule considéré. Dans ce domaine, on cherche à déterminer le plus rapidement possible la présence d'éléments frontaux qui sont susceptibles de présenter un risque de collision avec le véhicule considéré, afin de prévenir le conducteur, par un signal sonore, visuel ou autre, de la proximité d'un obstacle, et éventuellement de la nature de cet obstacle. La détection automatique d'obstacles est tout particulièrement utile lorsque les conditions de visibilité sont réduites, et donc notamment la nuit.

Dans ce domaine, différents types de solutions ont été proposés pour aider un conducteur à détecter un obstacle dans des conditions de circulation nocturne. Une minorité de solutions, dont la plupart sont encore à l'état de développement, réside dans l'utilisation d'équipements de type radars ou lidars. Mais de tels systèmes sont d'une part coûteux, du fait des équipements qu'ils font intervenir, et ne permettent pas de rendre une image visible de la scène observée, la fonction de ces équipements n'étant pas de former une image des obstacles rencontrés. Par ailleurs, ce type d'équipements ne peut pas permettre la discrimination entre un piéton et un autre obstacle d'épaisseur angulaire comparable.

Une grande majorité de ces solutions repose donc sur les systèmes dits de vision de nuit. Ces systèmes font tous intervenir des caméras particulières qui permettent de proposer au conducteur une représentation améliorée de la route qu'il emprunte et de ses abords ;la représentation améliorée, visible sur un écran, ou afficheur, placé dans l'habitacle du véhicule, donne une image comparable - voire meilleure - à la vision qu'aurait le conducteur s'il activait ses dispositifs projecteurs de type route, activation qui n'est pas possible lorsqu'on croise un autre véhicule sous peine d'éblouir les conducteurs adverses.

Les systèmes de vision de nuit peuvent se décomposer en deux catégories principales :

La première catégorie fait intervenir des caméras thermiques, ou caméras à infrarouge lointain ; ils sont désignés comme systèmes de vision nocturne passifs, du fait de leur capacité à fournir une image améliorée d'une scène par simple observation de celle-ci ; aucun dispositif de type illuminateur n'intervient ici.

La deuxième catégorie fait intervenir des caméras à infrarouge proche ; ils sont désignés comme systèmes de vision nocturne actifs, du fait de leur coopération avec un illuminateur. Un illuminateur est un dispositif projecteur projetant sur la scène à observer un faisceau infrarouge, dont la forme est voisine de celle d'un faisceau produit par un dispositif projecteur de type route. La gamme spectrale utilisée n'est donc pas dans le domaine du visible, et aucun éblouissement du conducteur adverse n'est à craindre.

Les deux catégories de système qui viennent d'être mentionnées posent des problèmes notamment en terme d'ergonomie. En effet, lors de la conduite de nuit, la charge mentale d'un conducteur est importante. L'observation, même intermittente, d'un afficheur sur lequel est montrée une image améliorée de la scène n'est pas intuitive, et peut même être perçue comme une source de distraction.

Un autre problème, propre aux systèmes de la première catégorie, réside dans le fait que l'image obtenue sur l'afficheur diffère sensiblement de l'image monochrome de la scène telle que le conducteur est habitué à la visualiser. En effet, dans le cas de l'utilisation des caméras thermiques, les niveaux de gris des pixels de l'image ne sont plus dépendants du niveau d'éclairement des objets qu'ils représentent, mais de leur niveau thermique. Ainsi, un objet clair mais froid sera restitué sombre, alors qu'un objet sombre mais chaud sera restitué clair. En conséquence, la représentation d'une image thermique sur l'afficheur peut demander quelques secondes au conducteur pour l'interpréter correctement, ce qui va à l'encontre du but initialement recherché, à savoir donner rapidement au conducteur la possibilité d'éviter des obstacles que sa seule vue, aidée par les dispositifs de type code - voire de type route - ne permettait pas de voir.

En réponse à ces problèmes, on a proposé, dans l'état de la technique, d'associer les systèmes de vision nocturne qui viennent d'être décrits à des calculateurs. Ces derniers ont pour rôle d'analyser, au moyen d'applications de traitements d'images, la scène telle qu'elle est perçue par les systèmes de vision de nuit pour déterminer la présence d'obstacles de type piétons dans ladite scène, et, le cas échéant, pour en informer le conducteur.

Une solution connue de l'état de la technique pour détecter la présence de piétons dans une scène captée par une caméra équipant un véhicule automobile recourt à des techniques de reconnaissance de forme : une image formée par la caméra est analysée après division de celle-ci en sous-images ; chaque sous-image est présentée à une chaîne de filtres optimisée ; le principe de sélection de ces chaînes de filtres est fondé sur des critères géométriques. Il réside dans une méthode d'apprentissage basée sur l'établissement, à partir de bases d'apprentissage, d'une base de données comportant des occurrences positives, correspondant à la présence d'un piéton, et d'occurrences négative, correspondant à l'absence de piétons.

Mais pour de telles solutions faisant intervenir des techniques de reconnaissance de forme, les bases d'apprentissage sont dédiées à une typologie précise d'obstacles à détecter. Ainsi, les bases d'apprentissage de détection de piétons ne permettent pas la détection d'animaux, de vélos ou de tout autre objet dont la silhouette se différentierait de celle d'un piéton. Par ailleurs, la diversité des silhouettes possibles pour un piéton est telle que des erreurs sont inévitables, de fausses occurrences de piétons pouvant être détectées, alors que de réelles occurrences peuvent ne pas l'être. Enfin, les solutions mentionnées pour la détection des piétons par reconnaissance de forme ne permettent pas d'évaluer avec certitude la distance du piéton au véhicule ;en effet, la taille visualisée n'est pas une information pertinente, et la position des pieds du piéton n'est corrélée à la distance recherchée que pour des situations théoriques correspondant à des scènes à plat ou à inclinaison connue.

C'est un objet de l'invention de répondre à l'ensemble des problèmes qui viennent d'être mentionnés. Dans l'invention, on propose une solution permettant de détecter rapidement et de façon certaine tout obstacle positionné sur la trajectoire d'un véhicule automobile. A cet effet, on propose, dans l'invention, d'utiliser un dispositif de type illuminateur, disposé sur - ou dans - le véhicule pour produire et projeter un motif particulier sur une scène à observer, et de filmer la scène ainsi éclairée au moyen d'une caméra appropriée ; selon l'invention, l'axe optique de la caméra et l'axe de projection du projecteur sont sensiblement parallèles au sens de déplacement du véhicule, tout en étant distant l'un de l'autre. Ainsi disposée, la caméra permet d'obtenir un point de vue de la scène à observer différent de celui obtenu depuis l'illuminateur. Dans de telles conditions, seuls les éléments du motif qui ont conservé leur forme et leur position originales correspondent à des obstacles sensiblement perpendiculaires à l'axe de projection. Une opération de filtrage est alors effectuée, consistant à comparer le motif original au motif visualisé par la caméra, permet de détecter la présence d'obstacles sur la trajectoire du véhicule.

Avantageusement, l'illuminateur projette le motif dans une plage de longueur d'onde invisible pour l'oeil humain, la caméra étant sensible à cette plage de longueur d'ondes, le motif étant par ailleurs régulier.

L'invention concerne donc essentiellement un procédé de détection d'obstacles frontaux, mis en oeuvre au sein d'un véhicule automobile observant une trajectoire sur une route, caractérisé en ce qu'il comporte les différentes étapes consistant à :
- équiper le véhicule automatique d'un dispositif illuminateur, présentant un axe de projection sensiblement parallèle à la trajectoire du véhicule, et d'une caméra, présentant un axe optique sensiblement parallèle à la trajectoire du véhicule, l'axe de projection et l'axe optique présentant un écart entre eux ;
- mémoriser, au sein du véhicule automobile, une image de référence présentant une répartition lumineuse préalablement déterminée ;
- réaliser et projeter sur une scène située dans la trajectoire du véhicule, au moyen du dispositif illuminateur du véhicule automobile, l'image de référence;
- visualiser, au moyen de la caméra, la scène comprenant l'image projetée, et mémoriser la visualisation;
- comparer l'image de référence mémorisée à l'image visualisée mémorisée pour, le cas échéant, déterminer des zones non déformées de l'image de référence ;
- assimiler les zones non déformées aux obstacles frontaux à détecter.

Par zones non déformées, on désigne les zones qui n'ont pas été déformées, à une translation près en se référant à l'image de référence. On considère qu'une zone d'une représentation de l'image de référence sur une scène donnée n'a pas subi de déplacement si, à l'erreur de parallaxe près due, le cas échéant, à la différence de position entre la caméra et le dispositif illuminateur, ladite zone occupe la même position que dans l'image de référence.

Le procédé selon l'invention peut, en complément des caractéristiques principales qui viennent d'être mentionnées, présenter une ou plusieurs des caractéristiques complémentaires suivantes :
- la projection de l'image de référence est réalisée dans une plage de longueur d'ondes invisibles pour l'oeil humain, et en ce que la caméra est sensible au moins à ladite plage de longueurs d'ondes utilisée ;
- la plage de longueur d'ondes est comprise dans l'intervalle de fréquences s'étalant de huit cents nanomètres à mille nanomètres ;
- l'image de référence est constituée de la répétition d'un motif, créant une succession de zones claires et de zones sombres ;
- le motif est un rectangle sombre, l'image de référence ainsi créée étant une grille constituée d'un entrelacement de lignes verticales claires et de colonnes horizontales claires ;
- le nombre de lignes claires est voisin de deux cents ;
- le motif présent au centre de l'image de référence présente des dimensions inférieures à celles du motif présent aux extrémités de ladite image ;
- le dispositif illuminateur et la caméra présentent au moins un écart latéral;
- l'écart latéral est au moins égal à quatre-vingt dix centimètres ;
- le dispositif illuminateur est asservi à un système de contrôle d'assiette du véhicule pour maintenir une distance de projection constante de l'image de référence sur la scène située sur la trajectoire du véhicule ;
- le procédé comporte l'étape supplémentaire consistant à utiliser une application de reconnaissance de formes sur les seules zones non déformées de l'image de référence projetée pour déterminer la nature de(s) obstacle(s) détecté(s) ;
- les étapes de réalisation et de projection de l'image de référence sur une scène située dans la trajectoire du véhicule comportent notamment l'opération consistant à placer, au niveau d'un deuxième foyer d'un réflecteur de dispositif projecteur elliptique coïncidant avec le foyer objet d'une lentille dudit dispositif projecteur, un objet créant, en l'éclairant et par projection, l'image de référence ;
- l'objet est une grille métallique ;
- l'objet est une lame de verre imprimée.

Un autre objet de l'invention est un véhicule automobile comportant au moins :
- une première unité de mémoire pour mémoriser une image de référence présentant une répartition lumineuse préalablement déterminée ;
- un dispositif illuminateur, présentant un axe de projection sensiblement parallèle à la trajectoire du véhicule, pour réaliser et projeter l'image de référence sur une scène située dans la trajectoire du véhicule;
- une caméra, présentant un axe optique sensiblement parallèle à la trajectoire du véhicule, l'axe de projection et l'axe optique présentant un écart entre eux, pour visualiser la scène comprenant l'image de référence projetée ;
- une deuxième unité de mémoire pour mémoriser la visualisation de la scène comprenant l'image projetée ;
- une application de comparaison entre l'image de référence mémorisée et l'image projetée comprise dans la scène mémorisée pour, le cas échéant, déterminer des zones non déformées de l'image de référence et assimiler les zones non déformées aux obstacles frontaux à détecter.

Le véhicule automobile selon l'invention comprend notamment des éléments de type calculateurs, microprocesseurs, mémoires, moyens d'échange de données... nécessaires pour mener à terme les différentes opérations de calcul et/ou de mémorisation qui sont susceptibles d'intervenir dans la mise en oeuvre du procédé selon l'invention.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, une représentation schématique d'une première vue de la projection d'une image de référence sur une scène située sur la trajectoire d'un véhicule;
- à la figure 2, un exemple d'image de référence utilisée dans une mise en oeuvre particulière du procédé selon l'invention ;
- à la figure 3, une représentation schématique d'une première récupération de l'image de référence projetée;
- à la figure 4, une représentation schématique d'une deuxième vue de la projection de l'image de référence sur une scène située sur la trajectoire d'un véhicule;
- à la figure 5, une représentation schématique d'une deuxième récupération de l'image de référence projetée;
- à la figure 6, une représentation schématique d'un obstacle détecté par un exemple de mise en oeuvre du procédé selon l'invention ;
- à la figure 7, un exemple de réalisation d'un dispositif illuminateur intervenant dans un exemple de mise en oeuvre du procédé selon l'invention.

Sur les différentes figures, les éléments qui sont communs à plusieurs figures auront conservé, sauf précision contraire, les mêmes références.

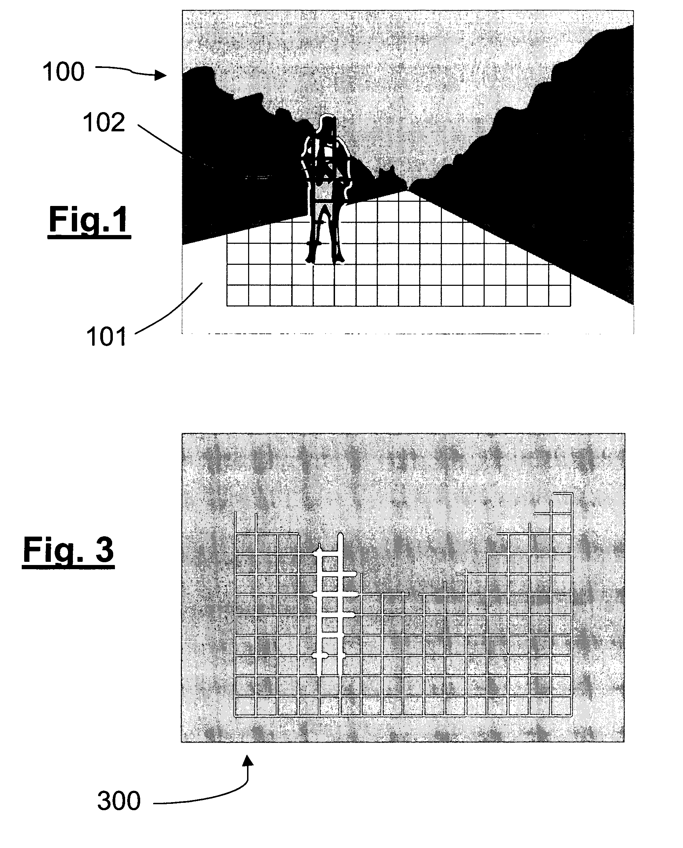

La figure 1 montre un exemple de scène 100 visible depuis un véhicule évoluant sur une route 101. Sur la scène 100 représentée est présent un piéton, 102, qui constitue un exemple d'obstacle dont le procédé selon l'invention permet la détection. Une image de référence est projetée sur la scène 100. Cette projection est réalisée au moyen d'un dispositif illuminateur dont l'axe de projection est sensiblement parallèle - c'est à dire ne présentant pas un écart supérieur à cinq degrés- à la trajectoire observée par le véhicule. Dans l'exemple décrit en référence à la figure 1 et aux figures qui suivent, on choisit, à titre d'exemple uniquement, une image de référence, visible à la figure 2, représentant une grille 200 constituée d'une succession de lignes horizontales 201 et de colonnes verticales 202. Les lignes 201 et les colonnes 202 correspondent physiquement à des zones claires de l'image de référence 200. Des motifs rectangulaires 203, ou carrés, délimités par les lignes 201 et les colonnes 202 correspondent physiquement à des zones sombres de l'image de référence. Par zones claires, on désigne les zones qui reçoivent effectivement de la lumière de la part du dispositif illuminateur installé sur lé véhicule, les zones sombres étant les zones ne recevant pas une telle lumière.

Dans un exemple avantageux de l'invention, l'image de référence est projetée dans une gamme de fréquence correspondant à l'infrarouge, gamme par exemple comprise dans l'intervalle s'étalant de 800 à 1000 nanomètres. Ainsi, les conducteurs adverses ne sont pas éblouis, et le conducteur du véhicule mettant en oeuvre l'invention n'est pas perturbé par la vision de l'image de référence projetée. Cependant, on envisage, dans d'autres exemples de mise en oeuvre, une projection de l'image de référence dans des gammes de fréquence différentes.

Dans un exemple avantageux de l'invention, pour un angle d'ouverture d'environ quarante degrés, on choisit un nombre de lignes voisin de deux cents, c'est à dire compris entre 185 et 215. Une tel choix permet d'assurer, dans l'image de référence projetée, la présence d'une ligne tous les cinquante centimètres entre une première ligne située à environ deux mètres, jusqu'à une dernière ligne située environ à cent mètres du véhicule.

Sur la figure 1, l'image de référence 200 projetée selon l'axe de projection du dispositif illuminateur, est vue depuis l'illuminateur réalisant la projection. Une caméra appropriée - c'est à dire capable de visualiser les fréquences émises par l'illuminateur - qui serait confondue avec l'illuminateur, et qui présenterait un axe optique sensiblement parallèle à la trajectoire du véhicule, permettrait d'obtenir une première représentation 300, visible à la figure 3, de l'image de référence projetée. La première représentation 300 ne présente pas de déformation notable ou significative de l'image de référence 200 du fait du point de vue utilisée.

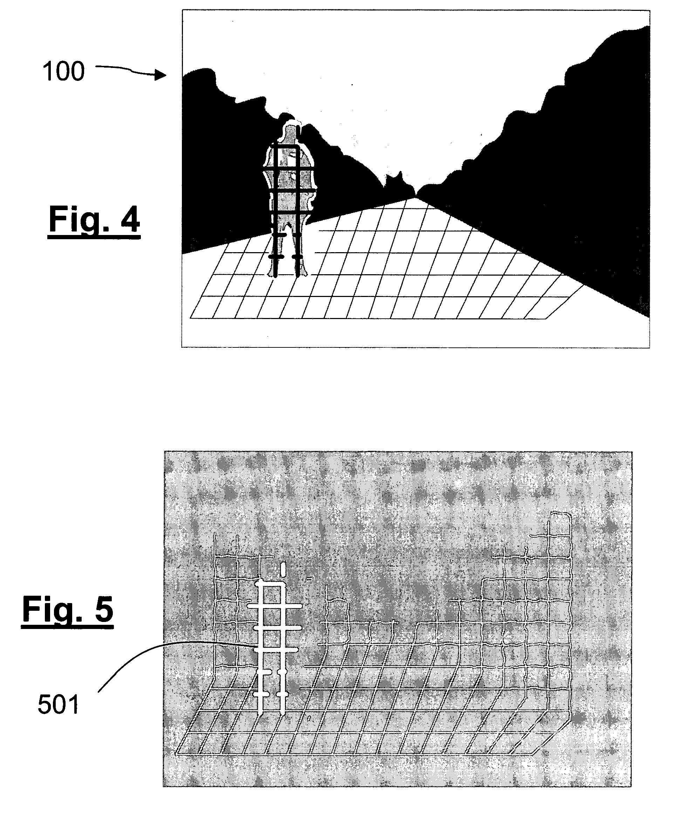

A la figure 4, on a représenté la même scène 100 qu'à la figure 1, mais d'un nouveau point de vue correspondant à une nouvelle position de la caméra équipant le véhicule. La caméra n'est à présent plus confondue avec le dispositif illuminateur, mais présente toujours un axe optique sensiblement parallèle à la trajectoire du véhicule. Comme montré à la figure 5, on obtient alors, vue de la caméra, une deuxième représentation 500 de l'image de référence 200 projetée. La deuxième représentation 500 présente des déformations notables sur une grande quantité de motifs présents dans l'image de référence. On constate que seules quelques zones 501 ne sont pas déformées, à une translation éventuelle près. Ces zones correspondent à des éléments de la scène qui sont perpendiculaires à l'axe de projection de l'illuminateur.

Avantageusement, on cherche à positionner le dispositif illuminateur et la caméra de telle sorte que ces deux éléments présentent entre eux un écart significatif, au moins voisin du mètre. En effet, plus l'écart est important, plus les déformations sont importantes pour les motifs qui ne sont pas perpendiculaires à l'axe de projection du dispositif illuminateur. La discrimination des motifs non déformés est ainsi rendue plus facile, et donc plus précise. Par exemple, le dispositif illuminateur peut être placé dans un des dispositifs projecteurs avant du véhicule considéré, et la caméra au niveau du dispositif projecteur avant opposé.

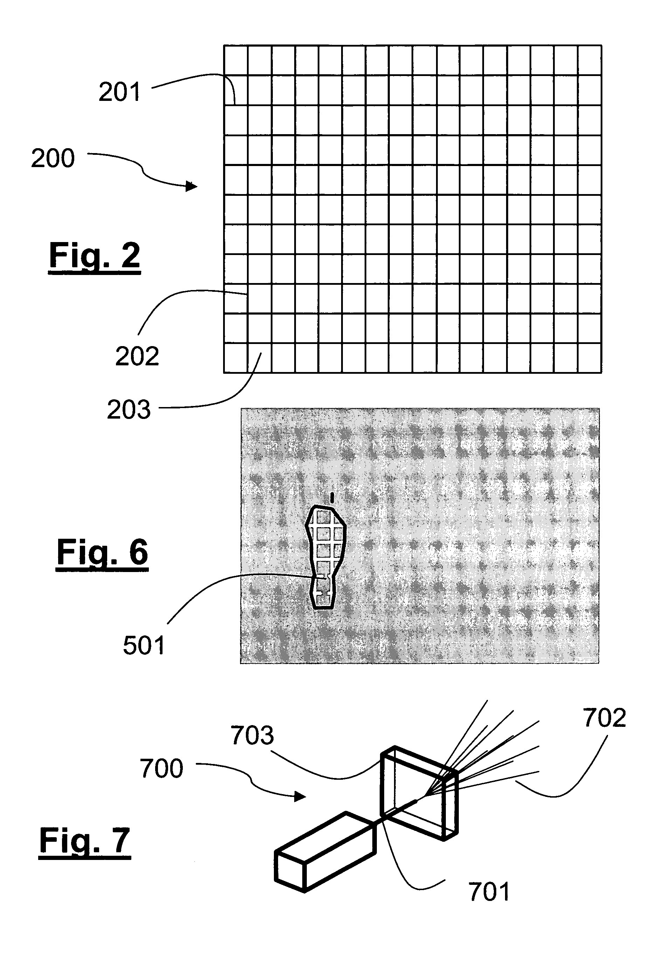

Dans l'invention, on propose donc d'extraire les zones 501 non déformées. A cet effet, on propose par exemple de faire intervenir au moins une unité de mémoire, présente au sein du véhicule, dans laquelle on a mémorisé la deuxième représentation 500 et l'image de référence telle qu'elle apparaîtrait si elle était projetée perpendiculairement sur un mur vertical placé à une distance préalablement déterminée et si elle était observée depuis le dispositif illuminateur. La comparaison de ces deux images mémorisées permet, au moyen d'un calculateur basique, l'extraction des zones non déformées 501, comme montré à la figure 6. Ces zones non déformées par rapport à la première représentation 300, sont alors assimilées à des obstacles détectés, dont la présence est signalée au conducteur par un moyen quelconque.

Dans une mise en oeuvre particulière du procédé selon l'invention, on propose d'appliquer différents algorithmes de traitement d'images sur les zones non déformées 501 précédemment identifiées. Ces applications consistent en des programmes de reconnaissance de forme permettant d'identifier la nature de l'obstacle rencontré. Le fait d'avoir préalablement extrait les obstacles de la scène observée limite grandement les calculs de reconnaissance de forme intervenant.

Dans un exemple particulier de mise en oeuvre du procédé selon l'invention, le dispositif illuminateur coopère avec un système de correction d'assiette présent sur certains véhicules : en fonction de l'inclinaison du véhicule, la position du dispositif illuminateur est ajustée - le plus souvent par un mouvement de rotation autour d'un axe horizontal et perpendiculaire à l'axe de projection, de telle sorte que la projection de l'image de référence soit réalisée à une distance constante sur une scène considérée. Une telle coopération peut notamment permettre d'évaluer précisément une distance entre le véhicule et un obstacle détecté : dans le cas de l'exemple illustré, où l'image de projection est la grille 200, il suffit alors de compter le nombre de lignes horizontales entre le bas de la grille et le bas de l'obstacle pour évaluer cette distance.

Tout dispositif illuminateur capable de projeter une image de référence peut être utilisé. Par exemple, on peut utiliser, comme représenté à la figure 7, des systèmes 700 à laser ou diode dont un faisceau produit 701 est étalé en un réseau 702 de lignes ou de plans espacés selon une répartition préalablement déterminée ; la répartition est définie au moyen d'un élément optique diffracteur 703, ou d'un élément optique holographique. Dans d'autres exemples, on peut choisir, pour réaliser le dispositif illuminateur, d'utiliser un projecteur, inspiré du principe des dispositifs projecteurs elliptiques, dans lequel on place au deuxième foyer d'une lentille un objet préalablement déterminé, dont l'image projetée forme sur la scène la répartition lumineuse souhaitée, correspondant à une image de référence. Dans l'exemple qui a été plus particulièrement détaillé, l'objet en question peut être une grille métallique, ou une lame de verre imprimée sur laquelle les impressions correspondent à la dite grille de telle sorte que cette dernière soit effectivement projetée sur la scène.

Avantageusement, l'image de référence qui est projetée est constituée de la répétition régulière d'un ou de plusieurs motifs géométriques ;les motifs géométriques considérés peuvent correspondre soit à des zones claires de l'image de référence, soit à des zones sombres de cette image. Leur forme régulière facilite l'opération de comparaison entre l'image de référence et la récupération au moyen d'une caméra éloignée du dispositif illuminateur pour déterminer quelles sont les zones qui apparaissent non déformées sur la scène. Dans certains modes de mise en oeuvre, on prévoit une plus forte concentration des motifs constituant l'image de référence vers le centre de cette image ; par exemple, l'image de référence peut être constituée de la répartition d'un motif rectangulaire de taille constante sur la totalité de l'image, sauf dans une partie centrale ou des motifs rectangulaires de taille moins importante sont utilisés. Une telle répartition permet notamment une meilleure précision dans la détection d'obstacles lointains.

L'invention est particulièrement avantageuse lorsqu'elle est mise en oeuvre dans des conditions de circulation nocturne, conditions dans lesquelles un obstacle est moins visible sans assistance. Elle peut cependant également être mise en oeuvre de jour. Le dispositif illuminateur doit alors générer des signaux lumineux suffisamment puissants pour pouvoir être détectés par la caméra.

## Revendications

1. Procédé de détection d'obstacles frontaux (102), mis en oeuvre au sein d'un véhicule automobile observant une trajectoire sur une route (101), **caractérisé en ce qu'**il comporte les différentes étapes consistant à :
- équiper le véhicule automatique d'un dispositif illuminateur (700), présentant un axe de projection sensiblement parallèle à la trajectoire du véhicule, et d'une caméra, présentant un axe optique sensiblement parallèle à la trajectoire du véhicule, l'axe de projection et l'axe optique présentant un écart entre eux ;
- mémoriser, au sein du véhicule automobile, une image de référence (200) présentant une répartition lumineuse préalablement déterminée ;
- réaliser et projeter sur une scène (100) située dans la trajectoire du véhicule, au moyen du dispositif illuminateur du véhicule automobile, l'image de référence;
- visualiser, au moyen de la caméra, la scène comprenant l'image projetée, et mémoriser la visualisation (500);
- comparer l'image de référence mémorisée à l'image visualisée mémorisée pour, le cas échéant, déterminer des zones non déformées (501) de l'image de référence ;
- assimiler les zones non déformées aux obstacles frontaux à détecter.

2. Procédé selon la revendication précédente **caractérisé en ce que** la projection de l'image de référence est réalisée dans une plage de longueur d'ondes invisibles pour l'oeil humain, et **en ce que** la caméra est sensible au moins à ladite plage de longueurs d'ondes utilisée.

3. Procédé selon la revendication précédente **caractérisé en ce que** la plage de longueur d'ondes est comprise dans l'intervalle de fréquences s'étalant de huit cents nanomètres à mille nanomètres.

4. Procédé selon l'une au moins des revendications précédentes **caractérisé en ce que** l'image de référence est constituée de la répétition d'un motif, créant une succession de zones claires et de zones sombres.

5. Procédé selon la revendication précédente **caractérisé en ce que** le motif est un rectangle sombre, l'image de référence ainsi créée étant une grille constituée d'un entrelacement de lignes verticales claires et de colonnes horizontales claires.

6. Procédé selon la revendication précédente **caractérisé en ce que** le nombre de lignes claires est voisin de deux cents.

7. Procédé selon l'une au moins des revendications 4 à 6 **caractérisé en ce que** le motif présent au centre de l'image de référence présente des dimensions inférieures à celles du motif présent aux extrémités de ladite image.

8. Procédé selon l'une au moins des revendications précédentes **caractérisé en ce que** le dispositif illuminateur et la caméra présentent au moins un écart latéral.

9. Procédé selon la revendication précédente **caractérisé en ce que** l'écart latéral est au moins égal à quatre-vingt dix centimètres.

10. Procédé selon l'une au moins des revendications précédentes **caractérisé en ce que** le dispositif illuminateur est asservi à un système de contrôle d'assiette du véhicule pour maintenir une distance de projection constante de l'image de référence sur la scène située sur la trajectoire du véhicule.

11. Procédé selon l'une au moins des revendications précédentes **caractérisé en ce qu'**il comporte l'étape supplémentaire consistant à utiliser une application de reconnaissance de formes sur les seules zones non déformées de l'image de référence projetée pour déterminer la nature de(s) obstacle(s) détecté(s).

12. Procédé selon l'une au moins des revendications précédentes **caractérisé en ce que** les étapes de réalisation et de projection de l'image de référence sur une scène située dans la trajectoire du véhicule comportent notamment l'opération consistant à placer, au niveau d'un deuxième foyer d'un réflecteur de dispositif projecteur elliptique coïncidant avec le foyer objet d'une lentille dudit dispositif projecteur, un objet créant, en l'éclairant et par projection, l'image de référence.

13. Procédé selon la revendication précédente **caractérisé en ce que** l'objet est une grille métallique.

14. Procédé selon la revendication 12 **caractérisé en ce que** l'objet est une lame de verre imprimée.

15. Véhicule automobile, apte à mettre en oeuvre le procédé de détection d'obstacles (102) selon l'une au moins des revendications précédentes, **caractérisé en ce qu'**il comporte notamment :
- une première unité de mémoire pour mémoriser une image de référence (200) présentant une répartition lumineuse préalablement déterminée ;
- un dispositif illuminateur (700), présentant un axe de projection sensiblement parallèle à la trajectoire du véhicule, pour réaliser et projeter l'image de référence sur une scène (100) située dans la trajectoire du véhicule;
- une caméra, présentant un axe optique sensiblement parallèle à la trajectoire du véhicule, l'axe de projection et l'axe optique présentant un écart entre eux, pour visualiser la scène comprenant l'image de référence projetée ;
- une deuxième unité de mémoire pour mémoriser la visualisation (500) de la scène comprenant l'image projetée ;
- une application de comparaison entre l'image de référence mémorisée et la visualisation mémorisée pour, le cas échéant, déterminer des zones non déformées (501) de l'image de référence et assimiler les zones non déformées aux obstacles frontaux à détecter.
